# EUROPEAN PATENT SPECIFICATION

(11) **EP 2 472 781 B1**
(45) Date of publication and mention of the grant of the patent: **08.01.2014**
(21) Application number: 10814923.8
(22) Date of filing: 11.06.2010
(51) Int. Cl.: H04L 12/24

(54) **NETWORK SYSTEM, EQUIPMENT AND VERIFICATION METHOD FOR VERIFYING NETWORK SERVICE**
NETZWERKSYSTEM, VORRICHTUNG UND PRÜFVERFAHREN ZUR ÜBERPRÜFUNG EINES NETZWERKDIENSTES
SYSTÈME DE RÉSEAU, ÉQUIPEMENT ET PROCÉDÉ DE VÉRIFICATION PERMETTANT DE VÉRIFIER UN SERVICE DE RÉSEAU

(30) Priority: 11.09.2009 CN 200910172963
(43) Date of publication of application: 04.07.2012
(73) Proprietor: ZTE Corporation, Shenzhen, Guangdong 518057 (CN)
(72) Inventor: ZHANG, Bin, Shenzhen City Guangdong Province,518057 (CN)
(74) Representative: Pichat, Thierry
(86) International application number: PCT/CN2010/073809
(87) International publication number: WO 2011/029321

(56) References cited:
- CN-A- 1 694 421
- CN-A- 1 855 841
- CN-A- 101 035 010
- CN-A- 101 146 283

## Description

### Technical Field

The present invention relates to the field of communication network system technologies, and more especially, to a network system, device and verification method for verifying service.

### Background of the Related Art

In communication networks, especially in the operation and maintenance process of the optical transmission device in the optical communication network, the operation and maintenance personnel use the optical network management system to monitor, maintain and manage the network.

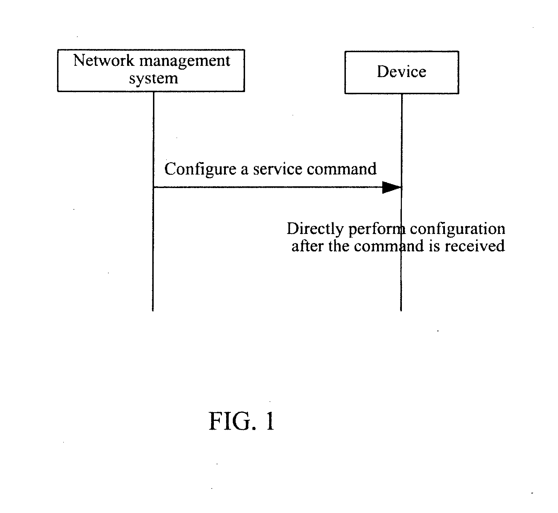

When bearing a service, the operation and maintenance personnel need to be very careful when operating the service, because operations such as configuration and maintenance on the service and so on might interrupt the service due to errors in configuration, which will cause a great impact. In the existing network system, as shown in FIG. 1, currently in the process of operation and maintenance, the operation and maintenance personnel usually use the network management system such as the local maintenance terminal and the local control terminal and so on to maintain the network device, and the operation and maintenance personnel directly send the data of the local maintenance terminal and local control terminal to device, and after the device receive the command, it directly performs the configuration, and if the service data are not consistent at this time, the service might be interrupted due to the configuration after sending the service.

At present, for all the functions that might affect the use of service, the optical network management system provides a second prompting method to remind the operation and maintenance personnel to confirm the accuracy of the data before operating the service, but such a confirmation is totally dependent on the personnel, and it only gives a prompt to remind the operation and maintenance personnel to perform a second confirmation, the correctness of the confirmation is totally dependent on the experience and status of the operation and maintenance personnel.

With the development of optical communication technology, device networking mode is increasingly flexible and complicated, the aforementioned method in which the operation and maintenance personnel manually check the correctness of the configuration data will not only consumes a lot of manpower, but also cannot guarantee that the manual check result is consistent with the actual optical device system; meanwhile, since the operation and maintenance personnel directly sending the data might interrupt the service, the impact will be enormous once there is error.

Currently, the technical solutions for verifying the device services, that is, it sends the data after manually checking the data and gives a second prompt, and its application scope is limited and easily leads to service interruption due to the misuse, thus a more reliable and convenient service verification method is desired.

The document CN1855841A discloses a method for carrying on data collocation to the distributed telecommunication system.

### Summary of the Invention

The technical problem to be solved in the present invention is to provide a network system, device and verification method for verifying service which are used in communication networks to achieve the verification function when operating the device services and overcome the defects of manual verification and improve the reliability and convenience of configuration operation.

In order to solve the aforementioned problem, the present invention provides a network system for verifying device services, comprising a network management system and a network device, wherein
the network management system is configured to: send a service configuration command to the network device;
said network device is configured to: receive the service configuration command, and check whether a service board corresponding to the service configuration command is currently in operation or not, if no, directly use the service configuration command to configure the service board, and report a configuration successful result to the network management system; if yes, compare service information to be configured in the service configuration command with service information currently in operation to perform verification, and if the service information to be configured is consistent with the service information currently in operation, allow to configure service and report the configuration successful result to the network management system, otherwise, not allow to perform a configuration process, and report a configuration unsuccessful result to the network management system.

The network management system comprises a service command sending module and an event prompting module; the network device comprises a board verification module and one or more boards;
the service command sending module is configured to: send the service configuration command to the board verification module;
the board verification module is configured to: check a board type, service type and function type on the network device, finish a verification of the service configuration command, determine whether to perform configuration or not according to a verification result, and report the verification result to the event prompting module;
the event prompting module is configured to: receive the verification result, and display or prompt the verification result.

The network management system is further configured to: before sending the service configuration command, judge whether the service configuration command requires a correlation verification or not, if the correlation verification is required, send the service configuration command passing the verification to the network device, otherwise, directly send the service configuration command.

The network management system comprises a correlation verification module, a service command sending module and an event prompting module; said network device comprises a board verification module and one or more boards;
the correlation verification module is configured to: judge whether the service configuration command requires the correlation verification or not, and if the correlation verification is required, notify the service configuration command passing the correlation verification to the service command sending module for sending, if the correlation verification is not required, notify the service command sending module to directly send the service configuration command, and report a result of the correlation verification to the event prompting module;
the service command sending module is configured to: send the service configuration command to the board verification module;
the board verification module is configured to: check a board type, service type and function type on the network device, finish a verification of the service configuration command, determine whether to perform configuration or not according to a verification result, and report the verification result to the event prompting module;
the event prompting module is configured to: receive the verification result, and display or prompt the verification result.

The board verification module is configured to: when verifying the service configuration command, firstly check whether the service board corresponding to the service configuration command is currently in operation or not, if no, directly use the service configuration command to configure the service board, and report a configuration result to the event prompting module; if yes, compare the service information to be configured in the service configuration command with service information currently in operation to perform verification, if it is found that the service information to be configured is consistent with the service information currently in operation, allow to configure the service and report the configuration successful result to the event prompting module; if not consistent, not allow to perform a configuration process, and report the configuration unsuccessful result to the event prompting module.

The present invention also provides a method for verifying device service, comprising:
a network management system sends a service configuration command to a network device; and
said network device performing service verification on a corresponding board service to be configured currently in operation in the service configuration command , comparing service data of the service configuration command with data of the corresponding board service currently in operation so as to perform verification, if a verification result is consistent, allowing to perform configuration, and directly configuring the service according to the service configuration command; otherwise, reporting the verification result to the network management system, and displaying or prompting the verification result in the network management system.

The method further comprises:
before sending the service configuration command to the network device, the network management system judging whether the service configuration command requires a correlation verification or not, if the correlation verification is required, sending the service configuration command passing verification to the network device, otherwise, directly sending the service configuration command to the network device.

Before the step of sending the service configuration command passing the verification to the network device, the method further comprises: the network management system performing matching detection according to type to be configured of related function of board to be configured in the service configuration command and a current service type of corresponding board, and if the detected service type is consistent with type to be configured of related configuration function, considering that the correlation verification is passed; if the detected service type is not consistent with the type to be configured of the related configuration function, considering that the correlation verification is not passed.

The method further comprises: the network device directly configuring the corresponding board service to be configured which is not in operation in the service configuration command.

The method further comprises: after the network device finishes configuring the corresponding board service to be configured in the service configuration command, reporting a configuration successful result to the network management system and recording the configuration successful result in the network management system; when the correlation verification is not passed, the network management system displaying or prompting a correlation verification failure result.

The preset invention further provides a network device, comprising a board verification module; the board verification module is configured to:
receive the service configuration command sent by the network management system, and check whether a service board corresponding to the service configuration command is currently in operation or not, if no, directly use the service configuration command to configure the service board and report a configuration result to the network management system; if yes, compare service information to be configured in the service configuration command with service information currently in operation so as to perform verification, if the service information to be configured is found to be consistent with the service information currently in operation, allow to configure a service and report a configuration successful result to the network management system, otherwise, not allow to perform a configuration process, and report a configuration unsuccessful result to the network management system.

Compared with the existing technology, the network system, device and verification method for verifying the service in the present invention can achieve the function of automatically verifying the device service and achieve a result of the high accuracy of automatic service verification, thus effectively ensuring that the service in operation will not be interrupted due to the error in the configuration information and effectively reducing the workload of the data verification by the operation and maintenance personnel, and improving the configuration speed and accuracy.

### Brief Description of Drawings

FIG. 1 is a flow chart of an optical network management system sending a service to a device in the related art;
FIG. 2 is a schematic diagram of a network system in the present invention;
FIG. 3 is a schematic diagram of a network system that verifies the service in the present invention;
FIG. 4 is a flow chart of method for verifying the device service in the present invention;
FIG. 5 is another flow chart of the verification method in which the service correlation verification is introduced for verifying the device service in the present invention.

### Preferred Embodiments of the Present Invention

To make the purpose, the technical solutions and the benefits of the present invention more clear, the present invention will be described in further detail in the following in combination with the accompanying drawings.

The network system and verification method for verifying the service provided in the present invention performs the automatic verification based on the service, especially performing verification on the service configuration currently in operation in the network system comprising the network management system and the network device. When the device receives a service configuration command of the network management system, whether the service is currently in operation or not is automatically judged, and the verification judgment is performed in accordance with the operational status and the current service configuration state, and when the service is currently in operation and the received configuration information does not match with the current service, the network device actively reports the relevant information to the network management system, and the operation and maintenance personnel make a judgment and confirmation again in order to achieve the correctness of sending the service.

The network management system might also provide a service judgment criterion to implement the correlation verification between the sent service and the related configuration, and when the network management system sends the service configuration command and other related configuration commands, the correlation judgment can be performed in advance so as to further ensure the correctness of sending the service.

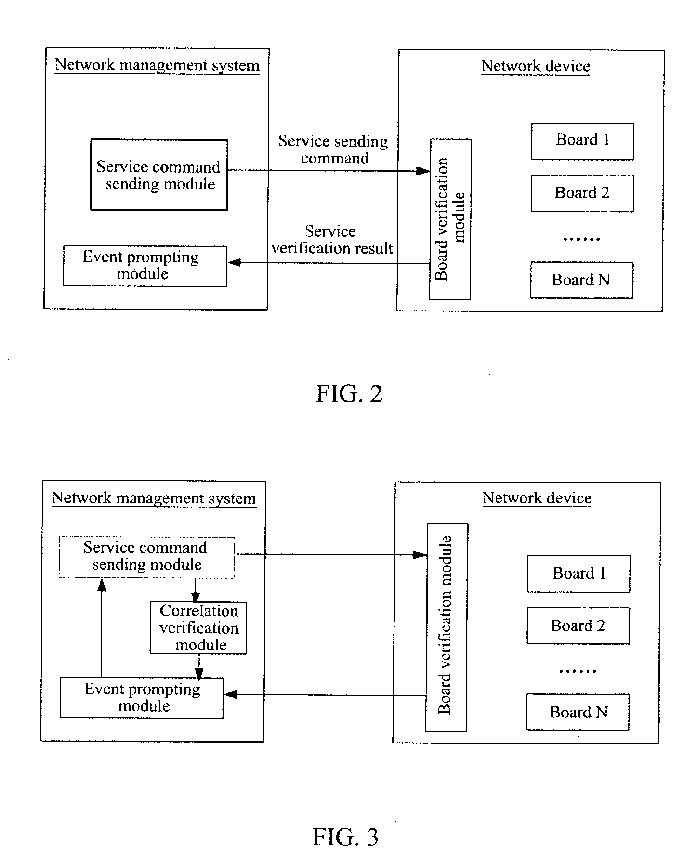

FIG. 2 shows a network system when the device service is verified in the present invention, comprising the network management system and network device, and furthermore,
the network management system comprises a service command sending module and an event prompting module;
said network device comprises a board verification module and one or more boards.

When the operation and maintenance personnel needs to send the service configuration command to the network device through the network management system:
the service command sending module is used to send the service configuration command to the board verification module; the board verification module is responsible for checking the board type, the service type and the function type and so on of the network device, finishing verifying the service configuration command, determining whether to perform verification or not according to the verification result.

The board verification module firstly check whether the service board corresponding to the service configuration command is currently in operation or not, if no, it directly uses the service configuration command to configure the service board and reports the configuration result to the event prompting module; if yes, it compares the service information to be configured in the service configuration command with the service information currently in operation so as to perform verification, and if the service information to be configured is found to be consistent with the service information currently in operation, it allows to configure the service and reports the configuration successful result to the event prompting module, otherwise, it doesn't allow to perform the configuration process and reports the configuration unsuccessful result to the event prompting module.

The event prompting module is used to record the configuration result information, which is reported by the board detection module, related to the service configuration command, and display the configuration result to the user in real time, and when the configuration is unsuccessful, prompt the user to perform confirmation, and the operation and maintenance personnel manually and eventually select whether to perform configuration or not.

Therefore, with the network system shown in FIG. 2, by adding the verifications for the sent configuration command in the present invention, the user is prompted that the current verification is unsuccessful so that the user performs a second confirmation when the verification is unsuccessful. When the verification is successful, the operation and maintenance personnel can be assured to perform configuration without a second cumbersome confirmation.

Furthermore, as shown in FIG. 3, the network management system might further comprises a correlation verification module which is used to perform the correlation verification on the service configuration command before the service command sending module sends the configuration command, and only those commands that pass the correlation verification are allowed to be sent, while those that do not meet the correlation requirements can be directly reported to the event prompting module to prompt the user that the current service configuration command has the problem of correlation, therefore, one verification can be completed before sending the service configuration command to further ensure the correctness of the service command configuration.

The correlation verification module is used to perform matching detection according to the type to be configured of related function of the board to be configured in the service configuration command and the current service type of corresponding board. If the detected service type is consistent with the type to be configured of the related configuration function, the correlation verification is considered as being passed, and the configuration is allowed; if the detected service type is not consistent with the type to be configured of the related configuration function, the correlation verification is considered as not being passed, and the configuration is not allowed.

For some relatively simple service configuration commands, they might not comprise the configuration parameters required by the correlation detection, thus, the correlation verification module is further used to: judge whether the service configuration command requires the verification of correlation detection or not, if it is found through verification that the service configuration command doesn't need the correlation verification, it is directly reported to the event prompting module, and the event prompting module is triggered to send the service command, and if it is found that the service configuration commands requires the correlation verification, the correlation verification is performed on the service configuration command, and the correlation verification is reported to the event prompting module. For the service configuration commands passing the correlation verification, the event prompting module is triggered to send the service commands, and for those without passing the correlation verification, the event prompting module prompts the user to perform selection and confirm whether to send the commands eventually or not. When the commands are sent, they are firstly sent to the board verification module for data verification, and the subsequent steps can refer to the description of FIG. 2.

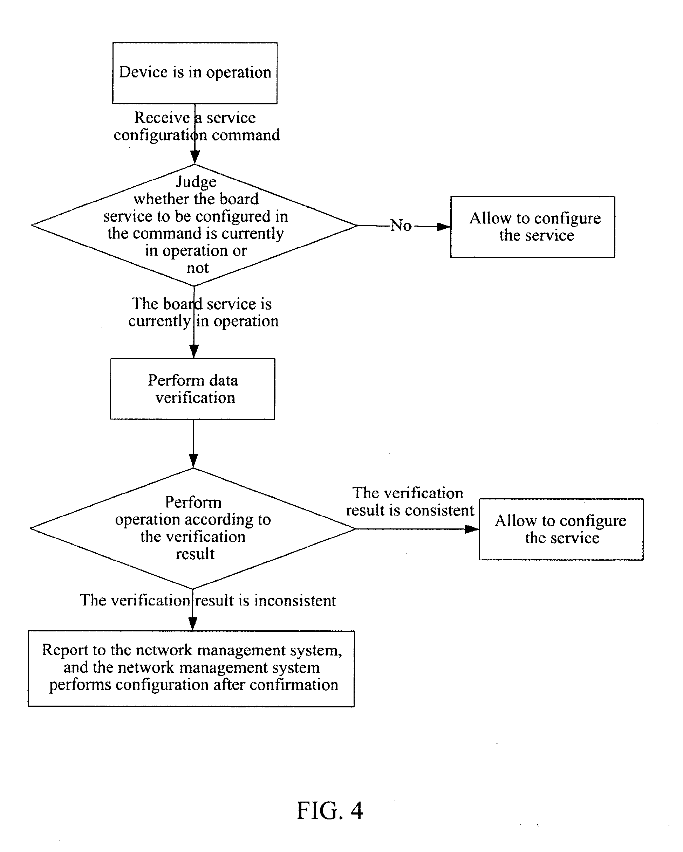

FIG. 4 is a method for verifying the device service provided in the present invention, and the device service comprises one or more board services, and the method comprises:
Step 1: the network management system sends a service configuration command to the network device, and the network device in operation receives the service configuration command, and the network device comprises one or more boards;
Step 2: the network device judges whether the corresponding board service to be configured in the service configuration command is currently in operation or not: if no, the configuration is allowed, and the service is directly configured according to the service configuration command, and a log is generated and reported to the network management system and recorded in the network management system; if yes, the service data verification is required, proceed to step 3;
step 3: the network device compares the service data in the service configuration command with the service data according to the board currently in operation so as to perform verification, and if the verification result is consistent, the configuration is allowed, and the service is directly configured according to the service configuration command, and the verification result and the service configuration result are reported to the network management system; if the verification result is inconsistent, proceed to step 4;
step 4: when the verification result is inconsistent, the network device reports the verification result to the network management system and displays the verification result in the network management system for the operation and maintenance personnel to select whether the service configuration command is eventually sent to the device or not.

A specific example based on the verification method shown in FIG. 4 is as follows.

### The first embodiment:

Suppose in the network device, the service board A supports 3 service types of GbE, FC and 2*FC, and the service of the service board A that has been started is the FC, and the service is in normal operation.

If the operation and maintenance personnel perform configuration operation on the service board A, the service of the service board A is set as the FC, and after the network management system sends the service configuration command to the network device, the board verification module finds out that the received FC service is consistent with the current service of the board

A, and the command is allowed to be directly sent.

If the operation and maintenance personnel perform service configuration on the service board A, the service of the service board A is set as the GbE, and after the network management system sends the service configuration command to the network device, the board verification module finds out that the received GbE service is not consistent with the current FC service of the board A, which is reported to the network management system, and the operation and maintenance personnel perform a second confirmation for the service configuration command and then send the command.

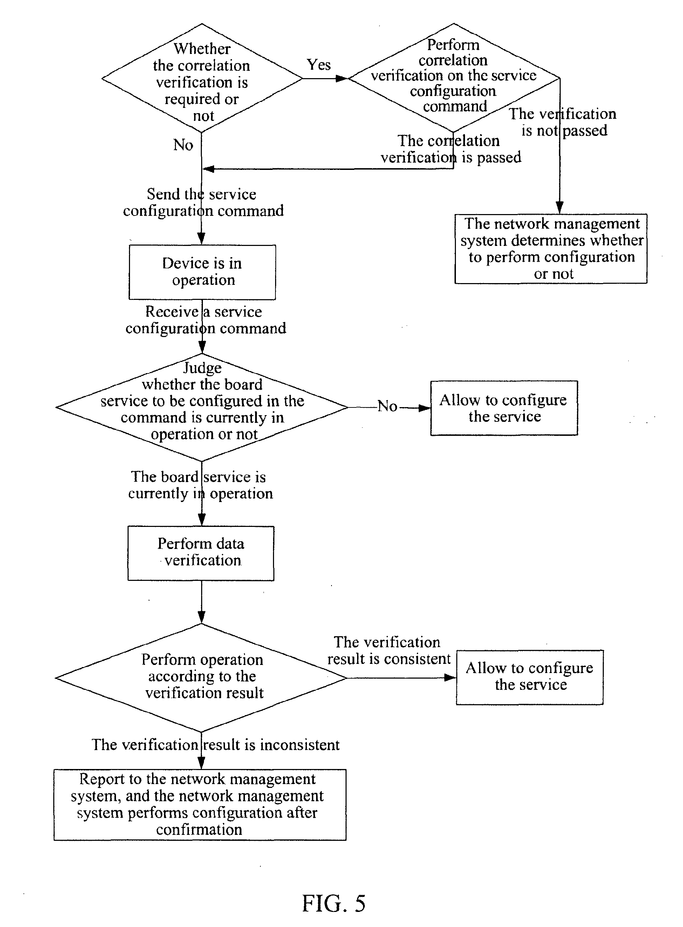

As shown in FIG. 5, it shows an embodiment of a method in which the correlation verification is added on the basis of the method for verifying the device service shown in FIG. 4. In the FIG. 5, before the network management system sends the service configuration command to the network device, the step of correlation verification is further comprised, namely:
when the operation and maintenance personnel need to send a service configuration command through the network management system, he/she firstly judges whether the service configuration command needs the correlation verification or not, if no, the service configuration command is sent to the network device, and the network device performs the service data verification according to the method shown in FIG. 4; if yes, the correlation verification is performed on the service configuration command, and if the verification is passed, the service configuration command is sent to the network device, and the network device performs the service data verification according to the method shown in FIG. 4, and if the verification is not passed, the result is reported to the network management system, and the operation and maintenance personnel confirms whether to perform configuration according to the service configuration command or not.

When the correlation verification is performed, the network management system performs the correlation verification between the service type and the configuration function according to the service configuration information in the service configuration command and the service configuration information of the board service to be configured:
if the detected service type is consistent with the configuration type of the related configuration function, the correlation verification is considered as being passed, and the configuration is allowed, at this time, it can be reported to the event prompting module for recording a log, and the verification successful result is displayed in real time;
if the detected service type is inconsistent with the configuration type of the related configuration function, the correlation verification is considered as not being passed, and the configuration is not allowed, at this time, the event prompting module records a log and displays the verification failure result in real time, and provides the verification failure reason for the operation and maintenance personnel to refer.

Two specific examples of the verification method in which the correlation verification is introduced based on FIG. 5 are as follows.

The second embodiment:
when the service board B of the network device configures the service, the board initialization operation and the dispersion setting operation need to be performed synchronously.

The operation and maintenance personnel performs the service configuration operation on the service board B, the board B needs to perform a correlation verification operation, and the correlation verification module in the network management system starts up to perform verification operation. According to the operation of the operation and maintenance personnel, it is found that the operation and maintenance personnel only sends the service configuration operation to the service board B, neither the board B initialization operation nor the dispersion setting operation is performed, thus the correlation verification fails, and the correlation verification module sends the correlation verification result to the event prompting module, and the event prompting module gives a prompt to remind the operation and maintenance personnel that the board initialization and dispersion setting should be operated synchronously.

The third embodiment:
when the service board C of the network device configures the service, it also needs to configure the channel state (the service is straight-through or add/drop state).

The operation and maintenance personnel performs the service configuration operation on the service board C, and the board C needs to perform the correlation verification operation, and the correlation verification module in the network management system starts up to perform verification operation. According to the operation of the operation and maintenance personnel, it is found that the operation and maintenance personnel only send the service configuration operation to the service board C with a lack of the channel state configuration, thus the correlation verification fails, and the correlation verification module sends the correlation verification result to the event prompting module, and the event prompting module gives a prompt to remind the operation and maintenance personnel that the channel state configuration needs to be performed.

The above description is only the embodiments of the present invention and is not intended to limit the present invention, for those skilled in the field, the present invention might have a variety of modifications and variations. Without departing from principles of the present invention, any modification, equivalent replacement and improvement and so on should be included in the scope of the claims of the present invention.

### Industrial Applicability

The present invention can achieve the function of automatically verifying the device service and achieve a result of accuracy of automatic service verification, thus effectively ensuring that the service in operation will not be interrupted due to the error in the configuration information and effectively reducing the workload of the data verification by the operation and maintenance personnel, and improving the configuration speed and accuracy.

## Claims

1. A network system for verifying device services, **characterized in that** the network system comprises a network management system and a network device, wherein,
the network management system is configured to: send a service configuration command to the network device;
said network device is configured to: receive the service configuration command, and check whether a service board corresponding to the service configuration command is currently in operation or not, if no, directly use the service configuration command to configure the service board, and report a configuration successful result to the network management system; if yes, compare service information to be configured in the service configuration command with service information currently in operation to perform verification, and if the service information to be configured is consistent with the service information currently in operation, allow to configure service and report the configuration successful result to the network management system, otherwise, not allow to perform a configuration process, and report a configuration unsuccessful result to the network management system.

2. The network system of claim 1, wherein,
the network management system comprises a service command sending module and an event prompting module; the network device comprises a board verification module and one or more boards;
the service command sending module is configured to: send the service configuration command to the board verification module;
the board verification module is configured to: check a board type, service type and function type on the network device, finish a verification of the service configuration command, determine whether to perform configuration or not according to a verification result, and report the verification result to the event prompting module;
the event prompting module is configured to: receive the verification result, and display or prompt the verification result.

3. The network system of claim 1, wherein,
the network management system is further configured to: before sending the service configuration command, judge whether to perform a correlation verification on the service configuration command or not, if the correlation verification is required, send the service configuration command passing the verification to the network device, otherwise, directly send the service configuration command.

4. The network system of claim 3, wherein,
the network management system comprises a correlation verification module, a service command sending module and an event prompting module; said network device comprises a board verification module and one or more boards;
the correlation verification module is configured to: judge whether the service configuration command requires the correlation verification or not, and if the correlation verification is required, notify the service configuration command passing the correlation verification to the service command sending module for sending, if the correlation verification is not required, notify the service command sending module to directly send the service configuration command, and report a result of the correlation verification to the event prompting module;
the service command sending module is configured to: send the service configuration command to the board verification module;
the board verification module is configured to: check a board type, service type and function type on the network device, finish a verification of the service configuration command, determine whether to perform configuration or not according to a verification result, and report the verification result to the event prompting module;
the event prompting module is configured to: receive the verification result, and display or prompt the verification result.

5. The network system of claim 2 or 4, wherein,
the board verification module is configured to: when verifying the service configuration command, firstly check whether the service board corresponding to the service configuration command is currently in operation or not, if no, directly use the service configuration command to configure the service board, and report a configuration result to the event prompting module; if yes, compare the service information to be configured in the service configuration command with the service information currently in operation to perform verification, if finding that the service information to be configured is consistent with the service information currently in operation, allow to configure the service and report the configuration successful result to the event prompting module; if not consistent, not allow to perform the configuration process, and report the configuration unsuccessful result to the event prompting module.

6. A method for verifying device service, **characterized in that** the method comprises:
a network management system sending a service configuration command to a network device; and
said network device performing service verification on a corresponding board service to be configured currently in operation in the service configuration command, comparing service data of the service configuration command with data of the corresponding board service currently in operation so as to perform verification, if a verification result is consistent, allowing to perform configuration, and directly configuring the service according to the service configuration command; otherwise, reporting the verification result to the network management system, and displaying or prompting the verification result in the network management system.

7. The method of claim 6, wherein the method further comprises:
before sending the service configuration command to the network device, the network management system judging whether to perform a correlation verification on the service configuration command or not, if the correlation verification is required, sending the service configuration command passing the verification to the network device, otherwise, directly sending the service configuration command to the network device.

8. The method of claim 7, wherein, before the step of sending the service configuration command passing the verification to the network device, the method further comprises:
the network management system performing matching detection according to a type to be configured of related function of board to be configured in the service configuration command and a current service type of corresponding board, and if detected service type is consistent with a type to be configured of related configuration function, considering that the correlation verification is passed; if the detected service type is not consistent with the type to be configured of the related configuration function, considering that the correlation verification is not passed.

9. The method of claim 6, 7 or 8, wherein the method further comprises:
the network device directly configuring a corresponding board service to be configured which is not in operation in the service configuration command.

10. The method of claim 9, wherein the method further comprises:
after the network device finishes configuring the corresponding board service to be configured in the service configuration command, reporting a configuration successful result to the network management system and recording the configuration successful result in the network management system; and
when the correlation verification is not passed, the network management system displaying or prompting a correlation verification failure result.

11. A network device, **characterized in that** the network device comprises a board verification module; wherein the board verification module is configured to:
receive a service configuration command sent by a network management system, and check whether a service board corresponding to the service configuration command is currently in operation or not, if no, directly use the service configuration command to configure the service board and report a configuration result to the network management system; if yes, compare service information to be configured in the service configuration command with service information currently in operation so as to perform verification, if the service information to be configured is found to be consistent with the service information currently in operation, allow to configure service and report a configuration successful result to the network management system, otherwise, not allow to perform a configuration process, and report a configuration unsuccessful result to the network management system.

## Patentansprüche

1. Netzwerksystem zum Verifizieren von Gerätdiensten, **dadurch gekennzeichnet, dass** das Netzwerksystem ein Netzwerk-Verwaltungssystem und eine Netzwerkgerät umfasst, wobei
das Netzwerk-Verwaltungssystem konfiguriert ist, um: einen Dienstkonfigurations-Befehl an das Netzwerkgerät zu senden;
wobei das Netzwerkgerät konfiguriert ist, um: den Dienstkonfigurations-Befehl zu empfangen und zu überprüfen, ob eine Dienstplatte, die dem Dienstkonfigurations-Befehl entspricht, gegenwärtig in Betrieb ist oder nicht, falls nicht, direkt den Dienstkonfigurations-Befehl zu verwenden, um die Dienstplatte zu konfigurieren und ein erfolgreiches Konfigurationsergebnis an das Netzwerk-Verwaltungssystem zu melden; falls ja, die Dienstinformation, die im Dienstkonfigurations-Befehl konfiguriert werden soll, mit der Dienstinformation, die gegenwärtig in Betrieb ist, zu vergleichen, um eine Überprüfung durchzuführen, und, wenn die Dienstinformation, die konfiguriert werden soll, mit der Dienstinformation, die gegenwärtig in Betrieb ist, übereinstimmt, zu ermöglichen, dass der Dienst konfiguriert und ein erfolgreiches Ergebnis der Konfiguration an das Netzwerk-Verwaltungssystem gemeldet wird, andernfalls nicht zu ermöglichen, dass ein Konfigurationsprozess durchgeführt und ein erfolgreiches Konfigurationsergebnis an das Netzwerk-Verwaltungssystem gemeldet wird.

2. Netzwerksystem nach Anspruch 1, wobei
das Netzwerk-Verwaltungssystem ein Dienstbefehl-Sendemodul und ein Ereignis-Auslösungsmodul umfasst; das Netzwerkgerät ein Platten-Überprüfungsmodul und eine oder mehrere Platten umfasst;
das Dienstbefehl-Sendemodul konfiguriert ist, um: den Dienstkonfigurations-Befehl an das Platten-Überprüfungsmodul zu senden;
das Platten-Überprüfungsmodul konfiguriert ist, um: einen Plattentyp, einen Diensttyp und einen Funktionstyp auf dem Netzwerk-Gerät zu überprüfen, eine Überprüfung des Dienstkonfigurationsbefehls zu beenden, zu bestimmen, ob gemäß einem Überprüfungsergebnis eine Konfiguration durchgeführt werden soll oder nicht, und das Überprüfungsergebnis an das Ereignis-Aufforderungsmodul zu berichten,
das Ereignis-Auslösungsmodul konfiguriert ist, um: das Überprüfungsergebnis zu empfangen, und das Überprüfungsergebnis anzuzeigen oder auszulösen.

3. Netzwerksystem nach Anspruch 1, wobei
das Netzwerk-Verwaltungssystem weiter konfiguriert ist, um: vor der Sendung des Dienstkonfigurations-Befehls zu beurteilen, ob eine Korrelationsüberprüfung des Dienstkonfigurations-Befehls durchgeführt werden soll oder nicht, wenn die Korrelationsüberprüfung erforderlich ist, den Dienstkonfigurations-Befehl zu senden, der die Überprüfung an das Netzwerkgerät weiterreicht, andernfalls den Dienstkonfigurations-Befehl direkt zu senden.

4. Netzwerksystem nach Anspruch 3, wobei
das Netzwerk-Verwaltungssystem ein Korrelations-Überprüfungsmodul, ein Dienstbefehls-Sendemodul und ein Ereignis-Aufforderungsmodul umfasst; wobei das Netzwerkgerät ein Platten-Überprüfungsmodul und eine oder mehrere Platten umfasst;
das Korrelations-Überprüfungsmodul konfiguriert ist, um: zu beurteilen, ob der Dienst-Konfigurationsbefehl die Korrelationsüberprüfung erfordert oder nicht, und wenn die Korrelationsüberprüfung erforderlich ist, Mitteilung an den Dienstkonfigurations-Befehl, der die Korrelationsüberprüfung an das Dienstbefehl-Sendungsmodul zur Sendung weiterleitet, wenn die Korrelationsüberprüfung nicht erforderlich ist, Mitteilung an das Dienstbefehl-Sendemodul, um den Dienst-Konfigurations-Befehl direkt zu senden, und ein Ergebnis der Korrelations-Überprüfung an das Ereignis-Auslösungsmodul zu berichten,
das Dienstbefehl-Sendemodul konfiguriert ist, um: den Dienstkonfigurations-Befehl an des Platten-Überprüfungsmodul zu senden;
das Platten-Überprüfungsmodul konfiguriert ist, um: einen Plattentyp, einen Diensttyp und einen Funktionstyp auf dem Netzwerkgerät zu überprüfen, eine Überprüfung des Dienstkonfigurationsbefehls zu beenden, zu bestimmen, ob gemäß einem Überprüfungsergebnis eine Konfiguration durchgeführt werden soll oder nicht, und das Überprüfungsergebnis an das Ereignis-Auslösungsmodul zu berichten;
das Ereignis-Auslösungsmodul konfiguriert ist, um: das Überprüfungsergebnis zu empfangen und das Überprüfungsergebnis anzuzeigen oder auszulösen.

5. Netzwerksystem nach Anspruch 2 oder 4, wobei
das Platten-Überprüfungsmodul konfiguriert ist, um: bei der Überprüfung des Dienstkonfigurationsbefehls zuerst zu überprüfen, ob die Dienstplatte, die dem Dienstkonfigurations-Befehl entspricht, gegenwärtig in Betrieb ist oder nicht, falls nicht, direkt den Dienstkonfigurations-Befehl zu verwenden, um die Dienstplatte zu konfigurieren und ein Überprüfungsergebnis an das Ereignis-Auslösungsmodul zu berichten, falls ja, die Dienstinformation, die im Dienstkonfigurations-Befehl konfiguriert werden soll, mit der Dienstinformation, die gegenwärtig in Betrieb ist, zu vergleichen, um eine Überprüfung durchzuführen, wenn festgestellt wird, dass die Dienstinformation, die konfiguriert werden soll, mit der Dienstinformation, die gegenwärtig in Betrieb ist, übereinstimmt, ermöglichen, den Dienst zu konfigurieren und das Überprüfungsergebnis an das Ereignis-Auslösungsmodul zu berichten, wenn sie nicht übereinstimmt, nicht zu ermöglichen, dass ein Konfigurationsprozess durchgeführt und das erfolglose Überprüfungsergebnis an das Ereignis-Auslösungsmodul berichtet wird.

6. Verfahren zur Überprüfung des Gerätdienstes, **dadurch gekennzeichnet, dass** das Verfahren Folgendes umfasst:
ein Netzwerk-Verwaltungssystem, das einen Dienstkonfigurations-Befehl an ein Netzwerkgerät schickt; und
wobei das Netzwerkgerät, das eine Dienstüberprüfung auf einem entsprechenden Plattendienst, der konfiguriert werden soll, der gegenwärtig im Dienstkonfigurationsbefehl im Betrieb ist, durchführt, die Dienstdaten des Dienstkonfigurations-Befehls mit den Daten des entsprechenden Datendienstes vergleicht, der gegenwärtig in Betrieb ist, um eine Überprüfung durchzuführen, wenn ein Überprüfungsergebnis übereinstimmt, Ermöglichung, die Konfiguration durchzuführen, und direkt den Dienst gemäß dem Dienstkonfigurations-Befehl zu konfigurieren, ansonsten Bericht des Überprüfungsergebnisses an das Netzwerk-Verwaltungssystem und Anzeige oder Auslösung des Überprüfungsergebnisses im Netzwerk-Verwaltungssystem.

7. Verfahren nach Anspruch 6, wobei das Verfahren weiter Folgendes umfasst:
vor der Sendung des Dienstkonfigurations-Befehls an das Netzwerk-Gerät, Beurteilung durch das Netzwerk-Verwaltungssystem, ob eine Korrelationsüberprüfung des Dienstkonfigurations-Befehls durchgeführt werden soll oder nicht, wenn die Korrelationsüberprüfung erforderlich ist, Sendung des Dienstkonfigurations-Befehls, der die Überprüfung an das Netzwerkgerät weiterreicht, ansonsten direkte Sendung des Dienstkonfigurations-Befehls an das Netzwerk-Gerät.

8. Verfahren nach Anspruch 7, wobei vor dem Schritt des Sendens des Dienstkonfigurations-Befehls, der die Überprüfung an das Netzwerk-Gerät weiterreicht, das Verfahren weiter Folgendes umfasst:
Durchführung, durch das Netzwerk-Verwaltungssystem, eines Übereinstimmungsnachweises gemäß einer Art, die konfiguriert werden soll, einer verwandten Funktion der Platte, die im Dienstkonfigurationsbefehl konfiguriert werden soll, und einer gegenwärtigen Dienstart einer entsprechenden Platte, und wenn die nachgewiesene Dienstart mit einem Art, die konfiguriert werden soll, einer verwandten Konfigurationsfunktion übereinstimmt, Annahme, dass die Korrelationsüberprüfung erfolgt ist; wenn der nachgewiesene Diensttyp nicht mit dem Typ, der konfiguriert werden soll, der verwandten Konfigurationsfunktion übereinstimmt, Annahme, dass die Überprüfung nicht erfolgt ist.

9. Verfahren nach Anspruch 6, 7 oder 8, wobei das Verfahren weiter Folgendes umfasst:
direkte Konfiguration durch das Netzwerkgerät eines entsprechenden Plattendienstes, der konfiguriert werden soll, der im Dienstkonfigurationsbefehl nicht in Betrieb ist.

10. Verfahren nach Anspruch 9, wobei das Verfahren weiter Folgendes umfasst:
nachdem das Netzwerkgerät die Konfiguration des entsprechenden Netzdienstes, der im Dienstkonfigurationsbefehl konfiguriert werden soll, beendet hat, Meldung eines erfolgreichen Konfigurationsergebnisses an das Netzwerk-Verwaltungssystem und Aufzeichnung des erfolgreichen Konfigurationsergebnisses im Netzwerk-Verwaltungssystem; und
wenn die Korrelationsüberprüfung nicht erfolgt ist, Anzeige oder Veranlassung durch das Netzwerk-Verwaltungssystem eines fehlerhaften Korrelations-Überprüfungsergebnisses.

11. Netzwerkgerät, **dadurch gekennzeichnet, dass** des Netzwerkgerät ein Platten-Überprüfungsmodul umfasst, wobei das Platten-Überprüfungsmodul konfiguriert ist, um:
einen Dienst-Konfigurationsbefehl zu empfangen, der von einem Netzwerk-Verwaltungssystem gesendet wurde, und zu überprüfen, ob eine Dienstplatte, die dem Dienstkonfigurations-Befehl entspricht, gegenwärtig in Betrieb ist, falls nicht, direkt den Dienstkonfigurations-Befehl zu verwenden, um die Dienstplatte zu konfigurieren und ein Konfigurationsergebnis an das Netzwerk-Verwaltungssystem zu melden; falls ja, die Dienstinformation, die im Dienstkonfigurations-Befehl konfiguriert werden soll, mit der Dienstinformation, die gegenwärtig in Betrieb ist, zu vergleichen, um eine Überprüfung durchzuführen, wenn die Dienstinformation, die konfiguriert werden soll, mit der Dienstinformation, die gegenwärtig in Betrieb ist, übereinstimmt, zu ermöglichen, dass der Dienst konfiguriert und ein erfolgreiches Ergebnis der Konfiguration an das Netzwerk-Verwaltungssystem gemeldet wird, andernfalls nicht zu ermöglichen, dass ein Konfigurationsprozess durchgeführt und ein erfolgreiches Konfigurationsergebnis an das Netzwerk-Verwaltungssystem gemeldet wird.

## Revendications

1. Système de réseau destiné à vérifier des services de dispositif, **caractérisé en ce que** le système de réseau comprend un système de gestion de réseau et un dispositif de réseau, dans lequel
le système de gestion de réseau est configuré pour : envoyer une commande de configuration de service au dispositif de réseau ;
ledit dispositif de réseau est configuré pour : recevoir la commande de configuration de service, et vérifier si une carte de service correspondant à la commande de configuration de service est actuellement en fonctionnement ou non, si ce n'est pas le cas, utiliser directement la commande de configuration de service pour configurer la carte de service, et signaler un résultat positif de configuration au système de gestion de réseau ; si c'est le cas, comparer les informations de service à configurer présente dans la commande de configuration de service aux informations de service actuellement en fonctionnement afin de réaliser une vérification, et si les informations de service à configurer sont cohérentes avec les informations de service actuellement en fonctionnement, autoriser la configuration du service et l'envoi du résultat positif de configuration au système de gestion de réseau, sinon, ne pas autoriser la réalisation d'un processus de configuration, et signaler un résultat négatif de configuration au système de gestion de réseau.

2. Système de réseau selon la revendication 1, dans lequel
le système de gestion de réseau comprend un module d'envoi de commande de service et un module de sollicitation d'événement ; le dispositif de réseau comprend un module de vérification de carte et une ou plusieurs cartes ;
le module d'envoi de commande de service est configuré pour : envoyer la commande de configuration de service au module de vérification de carte ;
le module de vérification de carte est configuré pour : vérifier un type de carte, un type de service et un type de fonction sur le dispositif de réseau, finir une vérification de la commande de configuration de service, déterminer s'il faut réaliser une configuration ou non selon un résultat de vérification, et signaler le résultat de vérification au module de sollicitation d'événement ;
le module de sollicitation d'événement est configuré pour : recevoir le résultat de vérification, et afficher ou solliciter le résultat de vérification.

3. Système de réseau selon la revendication 1, dans lequel,
le système de gestion de réseau est en outre configuré pour : avant d'envoyer la commande de configuration de service, juger s'il faut réaliser une vérification de corrélation sur la commande de configuration de service ou non, si la vérification de corrélation est requise, envoyer la commande de configuration de service ayant passé avec succès la vérification au dispositif de réseau, sinon, envoyer directement la commande de configuration de service.

4. Système de réseau selon la revendication 3, dans lequel,
le système de gestion de réseau comprend un module de vérification de corrélation, un module d'envoi de commande de service et un module de sollicitation d'événement ; ledit dispositif de réseau comprend un module de vérification de carte et une ou plusieurs cartes ;
le module de vérification de corrélation est configuré pour : juger si la commande de configuration de service requiert la vérification de corrélation ou non, et si la vérification de corrélation est requise, notifier la commande de configuration de service ayant passé avec succès la vérification de corrélation au module d'envoi de commande de service pour envoi, si la vérification de corrélation n'est pas requise, notifier au module d'envoi de commande de service d'envoyer directement la commande de configuration de service, et signaler un résultat de la vérification de corrélation au module de sollicitation d'événement ;
le module d'envoi de commande de service est configuré pour : envoyer la commande de configuration de service au module de vérification de carte ;
le module de vérification de carte est configuré pour : vérifier un type de carte, un type de service et un type de fonction sur le dispositif de réseau, finir une vérification de la commande de configuration de service, déterminer s'il faut réaliser la configuration ou non selon un résultat de vérification, et signaler le résultat de vérification au module de sollicitation d'événement ;
le module de sollicitation d'événement est configuré pour : recevoir le résultat de vérification, et afficher ou solliciter le résultat de vérification.

5. Système de réseau selon la revendication 2 ou 4, dans lequel,
le module de vérification de carte est configuré pour : lors de la vérification de la commande de configuration de service, d'abord vérifier si la carte de service correspondant à la commande de configuration de service est actuellement en fonctionnement ou non, si ce n'est pas le cas, utiliser directement la commande de configuration de service pour configurer la carte de service, et signaler un résultat de configuration au module de sollicitation d'événement ; si c'est le cas, comparer les informations de service à configurer dans la commande de configuration de service aux informations de service actuellement en fonctionnement pour réaliser la vérification, si l'on trouve que les informations de service à configurer sont cohérentes avec les informations de service actuellement en fonctionnement, autoriser la configuration du service et signaler le résultat positif de configuration au module de sollicitation d'événement ; si elles ne sont pas cohérentes, ne pas autoriser la réalisation du processus de configuration, et signaler le résultat négatif de configuration au module de sollicitation d'événement.

6. Procédé de vérification de service de dispositif, **caractérisé en ce que** le procédé comprend :
un système de gestion de réseau envoyant une commande de configuration de service à un dispositif de réseau ; et
ledit dispositif de réseau réalisant une vérification de service sur un service de carte correspondant à configurer actuellement en fonctionnement dans la commande de configuration de service, comparant les données de service de la commande de configuration de service aux données du service de carte correspondant actuellement en fonctionnement de façon à réaliser une vérification, si un résultat de vérification est cohérent, autorisant la réalisation de la configuration, et configurant directement le service selon la commande de configuration de service ; sinon, signalant le résultat de vérification au système de gestion de réseau, et affichant ou sollicitant le résultat de vérification dans le système de gestion de réseau.

7. Procédé selon la revendication 6, dans lequel le procédé comprend en outre :
avant l'envoi de la commande de configuration de service au dispositif de réseau, le jugement par le système de gestion de réseau permettant de savoir s'il faut réaliser une vérification de corrélation sur la commande de configuration de service ou non, si la vérification de corrélation est requise, l'envoi de la commande de configuration de service ayant passé avec succès la vérification au dispositif de réseau, sinon, l'envoi direct de la commande de configuration de service au dispositif de réseau.

8. Procédé selon la revendication 7, dans lequel, avant l'étape d'envoi de la commande de configuration de service ayant passé avec succès la vérification au dispositif de réseau, le procédé comprend en outre :
la réalisation par le système de gestion de réseau d'une détection de correspondance selon un type à configurer de fonction relative de carte à configurer dans la commande de configuration de service et un type de service actuel de carte correspondante, et si le type de service détecté est cohérent avec un type à configurer de fonction de configuration relative, la considération que la vérification est passée avec succès ; si le type de service détecté n'est pas cohérent avec le type à configurer de la fonction de configuration relative, la considération que la vérification de corrélation n'est pas passée avec succès.

9. Procédé selon la revendication 6, 7 ou 8, dans lequel le procédé comprend en outre :
la configuration directe par le dispositif de réseau d'un service de carte correspondant à configurer qui n'est pas en fonctionnement dans la commande de configuration de service.

10. Procédé selon la revendication 9, dans lequel le procédé comprend en outre :
après que le dispositif de réseau a fini de configurer le service de carte correspondant à configurer dans la commande de configuration de service, le signalement d'un résultat positif de configuration au système de gestion de réseau et l'enregistrement du résultat positif de configuration dans le système de gestion de réseau ; et
lorsque la vérification de corrélation n'est pas passée avec succès, l'affichage ou la sollicitation par le système de gestion de réseau d'un résultat d'échec de vérification de corrélation.

11. Dispositif de réseau, **caractérisé en ce que** le dispositif de réseau comprend un module de vérification de carte, dans lequel le module de vérification de carte est configuré pour :
recevoir une commande de configuration de service envoyée par un système de gestion de réseau, et vérifier si une carte de service correspondant à la commande de configuration de service est actuellement en fonctionnement ou non, si ce n'est pas le cas, utiliser directement la commande de configuration de service pour configurer la carte de service et signaler un résultat de configuration au système de gestion de réseau ; si c'est le cas, comparer les informations de service à configurer dans la commande de configuration de service aux informations de service actuellement en fonctionnement de façon à réaliser la vérification, si les informations de service à configurer se trouvent être cohérentes avec les informations de service actuellement en fonctionnement, permettre de configurer le service et signaler un résultat positif de configuration au système de gestion de réseau, sinon, ne pas permettre de réaliser un processus de configuration, et signaler un résultat négatif de configuration au système de gestion de réseau.
